# EUROPÄISCHE PATENTSCHRIFT

(11) **EP 0 381 846 B1**
(45) Veröffentlichungstag und Bekanntmachung des Hinweises auf die Patenterteilung: **10.08.1994**
(21) Anmeldenummer: 89123503.8
(22) Anmeldetag: 20.12.1989
(51) Int. Cl.: B60H 1/00, G05D 23/24

(54) **Einrichtung zur Temperaturregelung im Innenraum von Kraftfahrzeugen**
Apparatus for controlling the interior temperature of a motor vehicle
Dispositif de régulation de température intérieure d'un véhicule automobile

(30) Priorität: 06.02.1989 DE 3903462
(43) Veröffentlichungstag der Anmeldung: 16.08.1990
(73) Patentinhaber: Behr GmbH & Co., D-70469 Stuttgart (DE)
(72) Erfinder: Harnisch-Scheuermann, Jürgen, Dipl.-Ing. (FH), D-7000 Stuttgart 75 (DE)
(74) Vertreter: Fuhlendorf, Jörn, Dipl.-Ing.

(56) Entgegenhaltungen:
- DE-A- 1 430 268
- FR-A- 2 432 255
- GB-A- 1 184 817
- GB-A- 2 057 756
- US-A- 4 760 772
- PATENT ABSTRACTS OF JAPAN vol. 4, no. 132 (M-32)(614) 17 September 1980, & JP-A-55 87614 (MITSUBISHI) 02 Juli 1980,
- PATENT ABSTRACTS OF JAPAN vol. 9, no. 18 (M-353)(1741) 25 Januar 1985, & JP-A-59 165902 (NIPPON DENSO K.K) 19 September 1984,
- PATENT ABSTRACTS OF JAPAN vol. 10, no. 222 (M-504)(2278) 02 August 1986, & JP-A-61 60312 (KOJIMA PRESS CO LTD) 28 März 1986,
- PATENT ABSTRACTS OF JAPAN vol. 6, no. 249 (M-177)(1127) 08 Dezember 1982, & JP-A-57 144836 (MATSUSHITA DENKI SANGYO K.K) 07 September 1982,
- PATENT ABSTRACTS OF JAPAN vol. 4, no. 164 (M-41)(646) 14 November 1980, & JP-A-55 114611 (NIPPON DENSO K.K) 04 September 1980,
- PATENT ABSTRACTS OF JAPAN vol. 6, no. 256 (M-179)(1134) 15 Dezember 1982, & JP-A-57 151413 (NISSAN JIDOSHA K.K) 18 September 1982,

## Beschreibung

Die vorliegende Erfindung bezieht sich auf eine Einrichtung zur Temperaturregelung im Innenraum von Kraftfahrzeugen nach dem Oberbegriff des Anspruchs 1.

Im Innenraum von Kraftfahrzeugen, insbesondere von Personenkraftwagen besteht für die Fahrzeuginsassen ein Bedürfnis darin, die sich bei vorhandener Innentemperaturregelung einstellende Temperatur entsprechend der gerade vorhandenen Sonneneinstrahlung zu korrigieren. Bei häufig wechselnder Sonneneinstrahlung muß deshalb die Änderung des Temperatursollwertes sehr häufig und insbesondere auch von Hand vorgenommen werden. Eine starke Sonneneinstrahlung bedingt die Aufheizung des Fahrzeuginnenraums, welche jedoch durch den Innenraum-Temperaturregler erstens nur verzögert und zweitens auch nur zum Teil ausgeregelt werden kann, da die bekannten Innenraumtemperaturregler im allgemeinen als P-Regler ausgelegt sind und daher keinen I-Anteil besitzen. Die bekannten Innenraum-Temperaturregelungen sind daher hinsichtlich des zu erreichenden Komforts für die Fahrzeuginsassen verbesserungsbedürftig.

Es sind zwar bereits Maßnahmen vorgeschlagen worden, mit denen die Sonneneinstrahlung bei Kraftfahrzeugen mit einer Innenraumtemperaturregelung erfaßt und berücksichtigt werden kann, jedoch erfordern derartige Maßnahmen in Form von die Differenztemperaturen zwischen reflektierenden und schwarzen Flächen auswertenden Vorrichtungen erhebliche Zusatzaufwendungen, einschließlich eines Mikroprozessors, was nicht nur aufwendig, sondern auch teuer ist.

In der GB-A-2 057 756 ist eine Einrichtung zur Temperaturregelung im Innenraum von Kraftfahrzeugen der eingangs genannten Art offenbart, bei der eine Solarzelleneinheit mit einem im Kraftfahrzeug angeordneten Lüfter über eine Regelvorrichtung verbunden ist, welche von einem Temperatursensor angesteuert ist. Bei dieser bekannten Einrichtung soll bei einer Überhitzung des Kraftfahrzeug-Innenraums mit Hilfe der dann zur Verfügung stehenden Sonnenenergie der Lüfter zum Abführen der Wärme aus dem Kraftfahrzeug-Innenraum angetrieben werden. Dies bedeutet, daß dann, wenn der Temperatursensor eine zu hohe Temperatur im Kraftfahrzeug-Innenraum anzeigt, die Energie der Sonneneinstrahlung als Antriebsenergie für den Lüfter verwendet wird. Diese bekannte Einrichtung bzw. deren Regelvorrichtung ist ausschließlich hierzu bestimmt.

Aus der JP-A-55-87614 ist eine Einrichtung zur Temperaturregelung bekannt, die eine Kompensation eines durch Sonneneinstrahlung bewirkten Temperaturanstiegs in einem Abteil erlaubt. Hierbei ist vorgesehen, daß ein fotoelektrisches Element zur Messung der Sonneneinstrahlung mit einem Widerstand eines Teils einer Brücke, mit der ein Temperatursensor verbunden ist, parallelgeschalten ist. Ein vom Temperatursensor erzeugtes Signal wird auf ersten Analogeingang einer Regelvorrichtung gelegt. An, einem zweiten Analogeingang dieser Regelvorrichtung liegt das vom fotoelektrischen Element erzeugte Signal an. Die als Komparator ausgebildete Regelvorrichtung erzeugt aus diesen beiden, an getrennten Analogeingängen anliegenden Eingangssignalen ein Ausgangssignal, daß ein Aggregat einer Klimaanlage ansteuert. Nachteilig an der bekannten Einrichtung ist, daß die zwei getrennten Erfassungskeise - für die Temperatur einerseits und die Sonneneinstrahlung andererseits - eine relativ aufwendige und daher unwirtschaftliche Bauweise der bekannten Einrichtung mit sich bringen. Darüber hinaus können bei der bekannten Einrichtung in nachteiliger Art und Weise die bekannten Innentemperatur-Regelvorrichtungen nicht verwendet werden, da bei diesen der Anschluß eines separaten Sonneneinstrahlungs-Erfassungskreises im allgemeinen nicht möglich ist.

Aufgabe der vorliegenden Erfindung ist es deshalb, eine Einrichtung zur Temperaturregelung im Innenraum von Kraftfahrzeugen der eingangs genannten Art zu schaffen, mit der in einfacher und kostengünstiger Weise eine Anpassung des Innenraumtemperatur-Sollwertes an die jeweils herrschende Sonneneinstrahlung und damit Wärmestrahlungsverhältnisse erfolgen kann und bei der die bisher üblichen Innenraumtemperatur-Regelvorrichtungen weiterhin verwendet werden können.

Zur Lösung dieser Aufgabe sind bei einer Einrichtung zur Temperaturregelung im Innenraum von Kraftfahrzeugen der genannten Art die im Anspruchs 1 angegebenen Merkmale vorgesehen.

Durch die erfindungsgemäßen Maßnahmen ist es möglich, die bereits vorhandenen oder auch zusätzlich an den bekannten Regelvorrichtungen vorzusehenenden Analogeingänge bei der Aufschaltung eines entsprechenden Signales, das der Sonneneinstrahlung proportional ist, zu verwenden. Dies ist wenig aufwendig und daher in kostengünstiger Weise vorzusehen, da keine besonderen schaltungstechischen oder bauteilemäßigen Zusatzaufwendungen erforderlich sind. Dadurch sind auch Nachrüstungen einfach und schnell möglich.

Eine bevorzugte Ausführungsform vorliegender Erfindung ist durch die Merkmale des Anspruchs 2 verwirklicht. Vorteilhaft ist dabei, daß Solarzellen zur Gewinnung des Korrektursignals aus der Sonneneinstrahlung, Bewertungswiderstände und Spannungsteiler für die elektrische Verwirklichung sehr einfache und kostengünstig vorzusehende Bauteile sind. Außerdem kann dadurch in sehr empfindlicher und schneller Weise die Sonneneinstrahlung berücksichtigt werden, im wesentlichen noch eh die einfallende Sonnenstrahlung den Innenraum des Kraftfahrzeuges zu stark aufgeheizt hat.

Die elektrische Verbindung der genannten Parallelschaltung mit dem Spannungsteiler und der Regelvorrichtung kann bspw. entsprechend den Merkmalen des Anspruchs 3 erfolgen. Dadurch ergibt sich eine sehr genaue Regelung um den einmal eingestellten Temperatursollwert.

Damit die erfindungsgemäße Einrichtung auch in einem sehr breiten Temperaturbereich in gleicher Weise zufriedenstellend arbeitet, ist es zweckmäßig, die Merkmale gemäß Anspruch 4 vorzusehen, da dadurch eine Berücksichtigung der Sonneneinstrahlung auch dann möglich ist, wenn erhebliche Temperaturschwankungen auftreten.

Je nach dem zu erreichenden Fahrgastkomfort ist es zweckmäßig, den Fahrgastinnenraum im Kraftfahrzeug in verschiedene Zonen zu unterteilen, also bspw. in eine rechte und linke und/oder in eine vordere und hintere Zone, die dann jeweils in getrennter Weise in der Temperatur geregelt werden sollen. Es sind dann mehrere Solarzellen vorgesehen, die bspw. gemäß den Merkmalen des Anspruchs 5 über einen gemeinsamen Analogeingang mit der Regelvorrichtung verbunden sind. Es ist aber auch möglich, entsprechend den Merkmalen des Anspruchs 6 jede dieser Solarzellen bzw. deren Ausgang in getrennter Weise einem der Analogeingänge der Regelvorrichtung zuzuführen und daraus eine Stellgröße für jeweils eine der Zonen im Kraftfahrzeug-Innenraum abzuleiten. Dabei kann der andere Spannungsteiler gemäß Anspruch 7 ausgebildet sein.

Sind bei einem Ausführungsbeispiel vorliegender Erfindung die Merkmale gemäß Anspruch 8 vorgesehen, so ist es möglich, eine Korrektur des Temperatursollwertes auch beim Übergang von der Dämmerung zur völligen Dunkelheit vorzunehmen.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: eine Schaltungsanordnung für eine Einrichtung zur Temperaturregelung im Innenraum von Kraftfahrzeugen gemäß einem Ausführungsbeispiel vorliegender Erfindung,
- Figuren 2 und 3: jeweils eine schaltungstechnische Variante der Einrichtung nach Fig. 1 und
- Figur 4: eine Schaltungsanordnung für eine Einrichtung zur Temperaturregelung im Innenraum von Kraftfahrzeugen gemäß einem weiteren Ausführungsbeispiel vorliegender Erfindung.

Die in der Zeichnung in mehreren Ausführungsformen dargestellte Einrichtung 11, 12, 13 bzw. 14 dient zur Temperaturregelung im Innenraum von Kraftfahrzeugen derart, daß der eingestellte Innenraum-Temperatursollwert an die herrschende Sonneneinstrahlung bzw. die davon abgeleitete Wärmestrahlung angepaßt werden kann. Jede der Einrichtungen 11 bis 14 besitzt eine Regelvorrichtung 16 bzw. 17, wie sie auch in bisher üblichen Einrichtungen zur Temperaturregelung verwendet worden sind. Die Regelvorrichtung 16 bzw. 17 besitzt mehrere Analogeingänge 21 bzw. 22, mit denen ein oder mehr Regelverstärker 18 bzw. 19 verbunden sind, deren Ausgang 23 bzw. 24 eine oder mehrere Stellgrößen abgeben, die zu einem entsprechenden Stellglied einer nicht dargestellten Heiz-/Kühl-Einrichtung bzw. Klimaeinrichtung ein Kraftfahrzeug führt. Die Regelvorrichtung 16, 17 besitzt ferner eine Spannungstabilisierungseinheit 26 bzw. 27, die mit einer nicht dargestellten Spannungsquelle verbunden ist. Mit einem oder mehreren der Analogeingänge 21, 22 der Regelvorrichtung 16, 17 ist über einen oder mehrere Spannungsteiler 30, 31, 32 jeweils ein oder mehrere Solarsensoren 36 bis 41 verbunden, die die Sonneneinstrahlung bzw. die daraus abgeleitete Wärmestrahlung aufnehmen, in ein elektrisches Signal umsetzen und auswerten.

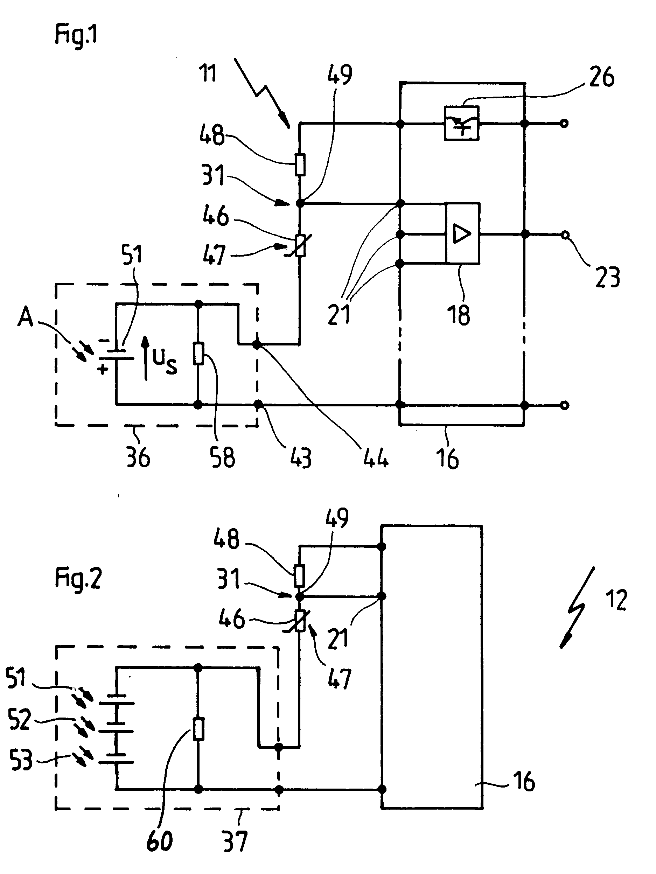

Beim in Fig. 1 dargestellten Ausführungsbeispiel der Einrichtung 11 zur Temperaturregelung des Innenraumes eines Kraftfahrzeuges ist ein Solarsensor 36 vorgesehen, der eine Parallelschaltung aus einer Solarzelle 51 mit der Solarspannung Uₛ und einem Bewertungswiderstand 58 aufweist. Der Bewertungswiderstand 58 ist an den betreffenden Typ der Solarzelle 51 angepaßt. Während der eine Ausgang 43 des Solarsensors 36 mit dem einen Pol, bspw. dem Massepol der nicht dargestellten Spannungsquelle verbunden ist, ist der andere Ausgang 44 des Solarsensors 36 mit dem einen Ende des Spannungsteilers 31 verbunden. Der Spannungsteiler 31 besteht aus dem NTC-Widerstand 46 eines Temperaturfühlers 47 und einem diesem Temperaturfühler zugeordneten Bewertungswiderstand 48, dessen dem Temperaturfühler 47 abgewandtes Ende mit der Spannungsstabilisierungseinheit 26 verbunden ist, die an den anderen Pol der Spannungsquelle angelegt ist. Ein Abgriff 49 zwischen dem NTC-Widerstand 46 und dem Bewertungswiderstand 48 des Spannungsteilers 31 ist mit einem der Analogeingänge 21 verbunden. Die Solarzelle 51 kann bspw. hinter der Windschutzscheibe oder hinter der Heckscheibe angeordnet sein.

Ist keine direkte Sonneneinstrahlung d.h. normales Tageslicht vorhanden, so wird der betreffende Analogeingang 21 der Regelvorrichtung 16 mit einem hauptsächlich von der Messung des Temperaturfühlers 47 abhängiges und entsprechend bewertetes Signal beaufschlagt. Erfolgt dagegen eine unmittelbare Sonneneinstrahlung gemäß den Pfeilen A auf den Solarsensor 36, so fließt aufgrund der durch die Solarzelle 51 erzeugten erhöhten Spannung durch den Bewertungswiderstand 58 des Solarsensor 36 ein höherer Strom, der bewirkt, daß der Temperaturfühler 47 in einer Richtung derart beaufschlagt wird, daß das am betreffenden Analogeingang 21 ankommende Signal eine zu hohe Ist-Temperatur vorgibt, so daß die Regelvorrichtung 16 ausgangsseitig eine Stellgröße abgibt, die den Temperatur-Sollwert herabsetzt.

Ist dagegen bspw. bei Dämmerung nur eine geringe Sonnen- bzw. Lichteinstrahlung und damit nur eine geringe Wärmestrahlung vorhanden, so kann der aufgrund der geringen Solarspannung sich ergebende geringere Stromfluß über den Bewertungswiderstand 58 sich korrigierend auf die prinzipbedingte Regelabweichung der als P-Regler ausgebildeten Regelvorrichtung 16 auswirken. Das am betreffenden Analogeingang 21 ankommende Signal gibt dann eine geringere Ist-Temperatur vor.

Der Bewertungswiderstand 42 für die Solarzelle 41 kann aber auch statt wie üblich linear nun nicht linear insoweit ausgebildet sein, als der Unterschied zwischen minimalem Solarstrom bei Dämmerung und keinen Stromfluß Null bei völliger Dunkelheit höher bewertet wird, um damit ein nochmaliges Anheben des Temperatur-Sollwertes bei völliger Dunkelheit, also bei Nacht zu erreichen.

Bei der in Fig. 2 dargestellten Variante bzw. Ausführungsform besitzt die Einrichtung 12 einen Solarsensor 37, der nicht nur mit einer Solarzelle 51 sondern mit zwei weiteren Solarzellen 52 und 53 bestückt ist, die elektrisch in Reihe geschaltet sind und deren Reihenschaltung parallel zu einem einzigen Bewertungswiderstand 57 angeordnet ist. Hiermit kann eine Unterteilung des Fahrgastinnenraumes hinsichtlich der Erfassung der Sonneneinstrahlung erreicht werden. Bspw. ist die Solarzelle 51 in einem rechten Bereich innen an der Frontscheibe, die Solarzelle 52 in einem linken Bereich innen an der Frontscheibe und die Solarzelle 53 innen an der Heckscheibe eines Kraftfahrzeugs angeordnet. Dadurch wird die Sonneneinstrahlung und damit die Wärmestrahlung an diesen drei Bereichen des Kraftfahrzeugs erfaßt, summiert und entsprechend im Spannungsteiler 31, der entsprechend dem der Fig. 1 aufgebaut ist, verwertet.

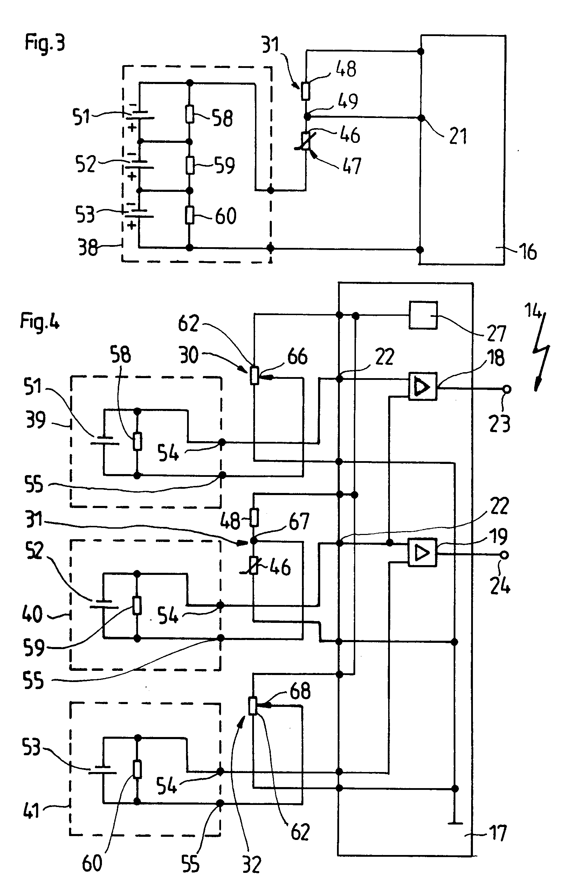

Bei der in Fig. 3 dargestellten Variante bzw. Ausführungsform besitzt der Solarsensor 38 der Einrichtung 13 ebenfalls drei Solarzellen 51 bis 53, die, wie vorne dargelegt, im Kraftfahrzeug-Innenraum entsprechend räumlich verteilt sein können, denen jedoch jeweils gesondert ein Bewertungswiderstand 58, 59 bzw. 60 zugeordnet ist. Somit besteht der Solarsensor 38 im wesentlichen aus drei in Reihe liegenden Parallelschaltungen aus Solarzelle und Bewertungswiderstand. Dieser Solarsensor 38 ist mit einer der der Fig. 1 entsprechenden Spannungsteilerschaltung 31 verbunden.

Bei einem weiteren Ausführungsbeispiel gemäß Fig. 4 ist die Einrichtung 14 mit drei Solarsensoren 39, 40 und 41 versehen, die die Sonneneinstrahlung jeweils rechts bzw. links bzw. in der Mitte oder hinten im Fahrgastinnenraum des Kraftfahrzeugs erfassen und getrennt auswerten. Dazu besitzt der Solarsensor 40 für bspw. den linken Bereich des Fahrgastinnenraumes eine Solarzelle 52 und einen parallel dazu vorgesehenen Bewertungswiderstand 59 und in entsprechender Weise die Solarsensoren 39 und 41 eine Solarzelle 51, 53 und jeweils einen Bewertungswiderstand 58, 60. Beim dargestellten Ausführungsbeispiel sind die Solarsensoren 39, 40 und 41 mit demjenigen Ausgang 54, der vom negativen Pol der Solarzelle anlangt, mit einem der Analogeingänge 22 der Regelvorrichtung 17 verbunden, während der andere Ausgang 55 des Solarsensors 39, 40, 41 mit einem Abgriff 66, 67 bzw. 68 des Spannungsteilers 30, 31 bzw. 32 verbunden ist. Während jeweils das eine Ende der Spannungsteiler 30 bis 32 mit der Spannungstabilisierungseinheit 27 verbunden ist, ist das andere Ende an Masse gelegt.

Beim in Figur 4 dargestellten Ausführungsbeispiel ist der Spannungsteiler 31, der mit dem Solarsensor 40 verbunden ist, ein dem der Fig. 1 entsprechender Spannungsteiler, der also aus dem NTC-Widerstand 46 eines Temperaturfühlers 47 und einem Bewertungswiderstand 48 hierfür besteht. Demgegenüber sind die beiden Spannungsteiler 31, 32 als Stellglieder in Form von Potentiometer 62 ausgebildet, deren Abgriff 66, 68 einstellbar ist.

Während die beiden Solarsensoren 39 und 41 auf jeweils einen Analogeingang 22 der Regelverstärkers 18 bzw. 19 der Regelvorrichtung 17 geführt sind, ist der Solarsensor 40 auf einen Analogeingang 22 sowohl des Regelverstärkers 18 als auch des Regelverstärkers 19 geführt. Am Ausgang 23 liefert der eine Regelverstärker 18 eine Stellgröße für den rechten Bereich des Fahrgastinnenraumes, während der Ausgang 24 des Regelverstärkers 19 eine Stellgröße für die Temperaturänderung im bspw. linken Bereich des Fahrgastinnenraumes liefert.

Es versteht sich, daß gegenüber den beschriebenen auch mehr bzw. weniger Solarsenoren bzw. Solarzellen vorgesehen sein können, je nach dem in welcher Weise der Fahrgastinnenraum temperaturmäßig unterteilt werden soll. Bspw. bei größeren Kraftfahrzeugen, wie Omnibussen kann eine weitere Unterteilung von Vorteil sein.

## Patentansprüche

1. Einrichtung zur Temperaturregelung im Innenraum von Kraftfahrzeugen, mit mindestens einem Innen- und/oder Außentemperaturfühler (47), der ein der Temperatur proportionales Signal erzeugt, mit einer Regelvorrichtung (16;17), deren mit dem oder den Temperaturfühlern verbindbare Analogeingänge (21;22) über einen Regelverstärker (18;19) mit einem Stellgrößenausgang (23;24) verbunden sind und die mit einer Spannungsversorgungseinheit (26;27) verbindbar ist, und mit mindestens einem Solarsensor, dadurch gekennzeichnet, daß das vom Innen- und/oder Außentemperaturfühler (47) erzeugte Signal durch den Solarsensor (36;37;38;39-41) in Abhängigkeit von der Sonneneinstrahlung korrigierbar ist, und daß dieses korrigierte Signal zur Anpassung eines vorgegebenen Innenraum-Temperatursollwertes an die herrschende Sonneneinstrahlung unmittelbar auf mindestens einen derjenigen Analogeingänge (21,22) der Regelvorrichtung (16,17) aufgeschaltet ist, welche mit dem Innen- und/oder Außentemperaturfühler (47) verbunden sind.

2. Einrichtung nach Anspruch 1, dadurch gekennzeichnet, daß der Solarsensor (36;37;38;39-41) mindestens eine Solarzelle (51-53) enthält, der mindestens ein Bewertungswiderstand (57 bis 60) parallel geschaltet ist, daß diese mindestens eine Parallelschaltung (36 bis 41) mit einem Spannungsteiler (30 bis 32) verbunden ist, der mit der Regelvorrichtung (16, 17) verknüpft ist, und daß der Spannungsteiler (31) einen Temperaturfühler (47) und einen Bewertungswiderstand (48) für diesen aufweist.

3. Einrichtung nach Anspruch 2, dadurch gekennzeichnet, daß die Parallelschaltung (36 bis 41) aus mindestens einer Solarzelle (51 bis 53) und mindestens einem Bewertungswiderstand (57 bis 60) mit dem einen Ende des Spannungsteilers (30 bis 32) und ein Abgriff (49) des Spannungsteilers (30 bis 32) mit einem der Analogeingänge (21, 22) der Regelvorrichtung (16, 17) verbunden sind.

4. Einrichtung nach Anspruch 2, dadurch gekennzeichnet, daß die Parallelschaltung (36 bis 41) aus mindestens einer Solarzelle (51 bis 53) und mindestens einem Bewertungswiderstand (57 bis 60) einenends mit einem Abgriff (66 bis 68) des Spannungsteilers (30 bis 32) und andernends mit einem der Analogeingänge (21, 22) der Regelvorrichtung (16, 17) verbunden ist.

5. Einrichtung nach mindestens einem der Ansprüche 2 bis 4, dadurch gekennzeichnet, daß mehrere Solarzellen (51 bis 53) in Reihenschaltung vorgesehen sind, denen jeweils getrennt oder gemeinsam ein Bewertungswiderstand (57; 58 bis 60) parallel geschaltet ist, und daß der auf diese Weise gebildete Solarsensor (37,38) mit einem Spannungsteiler (31) verknüpft ist.

6. Einrichtung nach mindestens einem der Ansprüche 2 bis 4, dadurch gekennzeichnet, daß mehrere Solarzellen (51 bis 53) vorgesehen sind, von denen jeder ein Bewertungswiderstand (58 bis 60) parallel geschaltet ist, daß jede derartige Parallelschaltung (39 bis 41) mit einem Spannungsteiler (30 bis 32) verknüpft ist, und daß mindestens einer der Spannungsteiler (31) einen Temperaturfühler (47) und einen Bewertungswiderstand (48) für diesen aufweist.

7. Einrichtung nach Anspruch 6, dadurch gekennzeichnet, daß der Spannungsteiler (30, 32) einen Sollwertsteller bspw. in Form eines Potentiometers (62) aufweist.

8. Einrichtung nach mindestens einem der Ansprüche 2 bis 7, dadurch gekennzeichnet, daß der Bewertungswiderstand (58 bis 60) für die Solarzelle nicht linear ist.

## Claims

1. Apparatus for controlling the interior temperature of a motor vehicle with at least one sensor (47) for the interior and/or exterior temperature, creating a signal proportional to the temperature, with a controlling device (16; 17), which analog entrances (21; 22) are connectable to the sensor(s) via an automatic-volume-control amplifier (18; 19) with a controller output (23; 24) and with at least one solar sensor, **characterized in that** the signal created by the sensor (47) for the interior and/or exterior temperature is correctable by the solar sensor (36; 37; 38; 39-41) in dependency of irradiation by solar rays and that this corrected signal is switched directly to at least one of those analog entrances (21, 22) of the controlling device (16, 17), which are connected to the sensor (47) for the interior and/or exterior temperature, for adapting a preset desired value of the interior temperature to the actual irradiation by the solar rays.

2. Apparatus according to claim 1, characterized in that the solar sensor (36; 37; 38; 39-41) contains at least one solar cell (51-53) to which at least one valuation resistance (57-60) is connected in parallel, that this at least one parallel circuit connection (36-41) is connected to a voltage divider (30-32), which is connected to the controlling device (16, 17) and that the voltage divider (31) has a temperature sensor (47) and a valuation resistance (48) for it.

3. Apparatus according to claim 2, characterized in that the parallel circuit connection (36-41) composed by at least one solar cell (51-53) and at least one valuation resistance (57-60) is connected to one end of the voltage divider (30-32) and one tap (49) of the voltage divider (30-32) is connected to one of the analog entrances (21, 22) of the controlling device (16, 17).

4. Apparatus according to claim 2, characterized in that the parallel circuit connection (36-41) is composed by at least one solar cell (51-53) and at least one valuation resistance (57-60) and is connected with one end of a tap (60-68) of the voltage divider (30-32) and with the other end of one of the analog entrances (21, 22) of the controlling device (16, 17).

5. Apparatus according to at least one of claims 2 - 4, characterized in that the several solar cells (51-53) are provided in parallel circuit connection, to which a valuation resistance (57, 58-60) is connected in parallel separately or in common respectively and that the solar sensor (37, 38) built up like this is connected to a voltage divider (31).

6. Apparatus according to at least one of claims 2-4, characterized in that several solar cells (51-53) are provided, to each a valuation resistance (58-60) is connected in parallel, that each of the parallel circuit connections (39-41) is connected to a voltage divider (30-32) and that at least one of the voltage dividers (31) is provided with a temperature sensor (47) and a valuation resistance (48) for it.

7. Apparatus according to claim 6, characterized in that the voltage divider (30, 32) has a desired-value adjuster, e.g. in the form of a potentiometer (62).

8. Apparatus according to at least one of claims 2-7, characterized in that the evaluation resistance (58-60) for the solar cell is not linear.

## Revendications

1. Dispositif de réglage de la température de l'habitacle de véhicules automobiles, comprenant au moins un capteur (47) de la température intérieure et/ou extérieure, qui génère un signal proportionnel à la température, un dispositif de réglage (16 ; 17), dont les entrées analogiques (21 ; 22) destinées à être connectées au ou aux capteur(s) de température sont connectées par l'intermédiaire d'un amplificateur de réglage (18 ; 19) à une sortie (23 ; 24) de grandeur réglante et qui est destiné à être raccordé à un module d'alimentation en tension (26 ; 27), ainsi qu'au moins un détecteur solaire, caractérisé en ce que le signal généré par le capteur (47) de température intérieure et/ou extérieure peut être corrigé par le détecteur solaire (36 ; 37 ; 38 39-41) en fonction du rayonnement solaire et en ce que ce signal corrigé est transmis directement à au moins l'une des entrées analogiques (21, 22) du dispositif de réglage (16, 17) qui sont connectées au détecteur (47) de la température intérieure et/ou extérieure pour l'adaptation d'une consigne prescrite de la température de l'habitacle au rayonnement solaire régnant.

2. Dispositif selon la revendication 1, caractérisé en ce que le détecteur solaire (36 ; 37 ; 38 ; 39-41) comprend au moins une cellule solaire (51-53) avec laquelle au moins une résistance de pondération (57 à 60) est montée en parallèle, en ce qu'au moins un montage en parallèle (36 à 41) est connecté à un diviseur de tension (30 à 32) qui est monté en circuit logique avec le dispositif de réglage (16, 17) et en ce que le diviseur de tension (31) comprend un capteur de température (47) et une résistance (48) de pondération de ce dernier.

3. Dispositif selon la revendication 2, caractérisé en ce que le montage en parallèle (36 à 41) se composant d'au moins une cellule solaire (51 à 53) et d'au moins une résistance de pondération (57 à 60) est connecté à l'une des extrémités du diviseur de tension (30 à 32) et une prise (49) du diviseur de tension (30 à 32) est connectée à l'une des entrées analogiques (21, 22) du dispositif de réglage (16, 17).

4. Dispositif selon la revendication 2, caractérisé en ce que le montage en parallèle (36 à 41) se composant d'au moins une cellule solaire (51 à 53) et d'au moins une résistance de pondération (57 à 60) est connecté par une extrémité à une prise (66 à 68) du diviseur de tension (30 à 32) et par l'autre extrémité à l'une des entrées analogiques (21, 22) du dispositif de réglage (16, 17).

5. Dispositif selon l'une au moins des revendications 2 à 4, caractérisé en ce que plusieurs cellules solaires (51 à 53) montées en série sont prévues et une résistance de pondération (57 ; 58 à 60) est montée en parallèle avec chacune d'elles séparément ou avec elles ensemble et en ce que le détecteur solaire (37, 38) ainsi formé est monté en circuit logique avec un diviseur de tension (31).

6. Dispositif selon l'une au moins des revendications 2 à 4, caractérisé en ce que plusieurs cellules solaires (51 à 53) sont prévues, une résistance de pondération (58 à 60) étant montée en parallèle avec chacune d'elles, en ce que chacun de ces montages en parallèle (39 à 51) est monté en circuit logique avec un diviseur de tension (30 à 32) et en ce qu'au moins l'un des diviseurs de tension (31) comprend un capteur de température (47) et une résistance (48) de pondération de ce dernier.

7. Dispositif selon la revendication 6, caractérisé en ce que le diviseur de tension (30, 32) est un variateur de consigne, par exemple sous forme d'un potentiomètre (62).

8. Dispositif selon l'une au moins des revendications 2 à 7, caractérisé en ce que la résistance (58 à 60) de pondération de la cellule solaire n'est pas linéaire.
